# EUROPEAN PATENT SPECIFICATION

(11) **EP 2 684 641 B1**
(45) Date of publication and mention of the grant of the patent: **16.09.2015**
(21) Application number: 13175958.1
(22) Date of filing: 10.07.2013
(51) Int. Cl.: B23Q 1/48, B23Q 1/54

(54) **Machine tool**
Maschinenwerkzeug
Machine-outil

(30) Priority: 13.07.2012 IT MO20120182
(43) Date of publication of application: 15.01.2014
(73) Proprietor: Emmegi S.P.A., 41010 Limidi di Soliera (MO) (IT)
(72) Inventor: Caiumi, Andrea, 41012 Carpi (MODENA) (IT); Mattioli, Marco, 41128 Modena (IT)
(74) Representative: Crugnola, Pietro

(56) References cited:
- DE-A1- 19 507 989
- US-A1- 2005 217 095
- US-A1- 2007 059 116

## Description

The invention relates to a tool holder head for machining elongated elements, for example profile sections or panels with a constant section that are made of metal or plastic material or wood or composites, for example used in frames of fixtures, windows, french windows, doors, shutters or industrial applications. In particular, the invention relates to a numerically controlled multiple axis tool holder head comprising a tool holder unit. Multiple axis machine tools are known that comprise tool holder head fitted slidably on a frame of the machine tool and provided at one end with a tool holder unit on which the tool is fitted that is most suitable for the machining task to be performed.

The tool holder unit can for example be provided with a rotating-disc blade or saw and/or with a milling unit, driven by a spindle, the rotating-disc blade or the milling unit, being arranged for interacting with an elongated element to be machined, supported and locked by suitable supporting means connected to the base of the machine. The supporting means generally has a plurality of vices that are spaced away from one another and aligned along a longitudinal axis of the element. The vices engage and lock the elongated element, which can be suitably machined by the tool.

The multiple axis machine tools permit great machining flexibility and precision for cutting, or machining, the elongated element from different angles and performing complex machinings thereupon in various positions.

Of the multiple axis machine tools, the five-axis machine tools usually comprise a slide that supports the tool holder head. The slide is movable along a first vertical movement direction Z, away from or towards the elongated element, a second movement direction X substantially parallel to the longitudinal axis of the elongated element, and a third movement direction Y that is almost orthogonal to the second direction X. The three directions X, Y and Z are parallel to the axes of a Cartesian reference system. The tool holder head comprises a first body, fixed to said slide, a second body rotatably supported by the first body so as to be able to rotate 360° around a first rotation axis C, parallel, for example, to the vertical axis Z, and a third body with which the tool-holder unit is associated, which is rotatably supported by the second body around a second axis A that rotates orthogonally and incidentally with respect to the rotation axis C of the second body.

In this manner, the tool holder unit has five degrees of freedom, being able to translate in the three directions of a Cartesian reference system and to rotate around the first axis C and the second axis A.

Usually, the third body comprises an elongated element that houses the tool holder unit and the longitudinal axis of which coincides with the rotation axis of the tool. At one end of the third body, opposite with respect to the tool, a rotation articulation is provided that is centred on the axis A, to rotate the third body with respect to the second body. In this manner the rotation axis of the tool intersects the second axis A.

US 2005/21.7095 discloses a tool holder head corresponding to the preamble of claim 1. The tool holder head disclosed in US 2005/217095 is used for machinings elongated elements, in particular profiled sections or panels with a constant section, that are made of metal or
plastic material or wood or composites. The tool holder head comprises a first body that is fixable to a slide of a machine tool that is movable along three directions that are mutually orthogonal to one another, said first body supporting a second body that is rotatable by 360° with respect to said first body around a first axis parallel to one of said three directions, and supporting in turn a third body that is rotatable around a second axis that is orthogonal to and incident to said first axis, said third body being rotatably supported by said second body at an articulation that defines a turning coupling between the second body and the third body around said second axis, said third body comprising a tool holder unit supporting a tool, for example a cutting means or a milling unit, that is rotatable around a third axis; said head comprising driving means for moving said tool and/or said third body and/or said second body so as to cause an interaction between said elongated element and said tool, wherein said tool holder unit is fixed at a lower end of said third body.

DE 195 07 989 discloses a tool holder head that comprises a first body fixed to a carrier and second body mounted on the first body to rotate around a first pivot axis. A spindle bearing unit constituting a third body is mounted to swivel on the second body. The spindle bearing unit has a swivel axis spatially at right-angles to the first pivot axis, and a tool spindle fitted :in the spindle bearing unit to rotate around a second pivot axis.

The second pivot axis is located spatially at right-angles to the swivel axis of the spindle unit.

In both cases, such tool holder heads have significant dimensions at the articulation point between the second and the third body, both considering the overall dimensions of the head in the direction of the second axis A determined by the sum of the dimensions of the second and third body, and considering the overall dimensions along a direction that is orthogonal to the second axis A and orthogonal to the first axis C, the overall dimensions being determined by the dimensions of the larger of the second and third body.

It is known that for machining elongated elements, for example aluminium, or PVC, or wooden profile sections with precision it is necessary to support the elongated element with many vices, placed as close as possible to the zone of the profile section to be machined. A vice placed, for example, near a milling point, significantly reduces the vibrations of the profiled sections during machining and thus increases the precision and quality of the machining.

The minimum distance betwen two consecutive vices is determined by the overall dimensions of the tool holder head on the X-Z plane, if the workpiece is arranged with the longitudinal axis parallel to the axis X.

In order to optimise workpiece machining time, it is necessary for the electrical head to be able to be brought as close as possible to the workpiece without the structure thereof interference with the vices, which further enables the number of repositionings of the vices during machining to be minimised.

The tool holder heads known from the prior art, have, however, overall dimensions that are such as not to be able to achieve the optimum machining conditions disclosed above, which makes it necessary to reposition the vices many times during the machining of a workpiece, which increases the time required for machining a workpiece and a significant reduction in productivity.

Another condition that a tool holder head must meet is that of minimising the displacement thereof in the direction of the axis Z in the transition from machining the upper face of the workpiece to machining a side face of the workpiece. In fact, the precision of the machinings depends on the size of said displacement along the axis Z: a machine tool that needs a long stroke along the (vertical) axis Z, has to necessarily consist of very stiff structural elements that are thus very heavy, to ensure precision. A machine with long strokes along the axis Z will extend in height, thus it will tend to be very heavy and instable. Minimising the vertical stroke is a great quality of a machine tool.

The tool holder heads known from the prior art in general have overall dimensions that are such as not to allow said displacement in the direction of the Z axis to be minimised. An object of the invention is to improve the tool holder heads for machining elongated elements, in particular profiled sections of frames, overcoming the aforesaid drawbacks. Another object is to make a tool holder head that enables a plurality of different machining tasks to be performed on a workpiece, minimising repositioning of the vices and the stroke of the tool holder head in the three Cartesian directions X, Y and Z. According to the invention a tool holder head is provided for machining elongated elements as defined in claim 1.

Owing to the invention, a tool holder head is provided that is able to machine even between two continuous near vices inasmuch as it has a tool holder unit the total occupied space of which depends exclusively on the tool holder unit. As the axis of the tool holder unit is in fact skewed with respect to the rotation axis A between the second and the third body, the total space occupied by the second body is not decisive in defining the working field of the tool holder unit.

This gives the tool holder head significant flexibility of use and a large portion is also guaranteed that is useful for cutting if the fitted tool is a blade. In particular, it is possible to perform cutting and separating operations in a single U-shaped movement without interruptions to the motion of the tool holder head.

The invention can be better understood and implemented with reference to the attached drawings that illustrate an embodiment thereof by way of non-limiting example, in which:
Figure 1 is a perspective view of a tool holder head of a machine tool (not illustrated) according to the invention, shown in four different operating configurations to perform respective head and side machining on an elongated element, in which a tool holder unit holds a milling unit;
Figure 2 is a side view of the tool holder head according to the invention, shown in two different operating configurations to perform respective lateral machining on the elongated element, in which the tool holder unit holds both a disc blade and a milling unit, merely by way of example;
Figure 3 is a side view of the tool holder head in Figure 2, in two further operating conditions, to perform respective machinings on an upper face of the elongated element, a first and a second body of the tool holder head being maintained in the same position with respect to Figure 2 and a third body being rotated 90°, in which the tool holder unit holds both a disc blade and a milling unit, merely by way of example;
Figure 4 is a left front view, and right rear view, of the tool holder head in Figure 2;
Figure 5 is a rear side perspective view from the right of the tool holder head in Figure 2, in which some parts of the first body have been removed to show driving means for rotating the second body with respect to the first body;
Figure 6 is a rear side perspective view from the left of the tool holder head in Figure 5, in which some parts of the second body have been removed, to show driving means for rotating the third body with respect to the second body.
Figure 7 is a rear view of the tool holder head in Figures 2 and 3, in an operating condition during successive steps from (a) to (e) of cutting and separating operations of an elongated element.

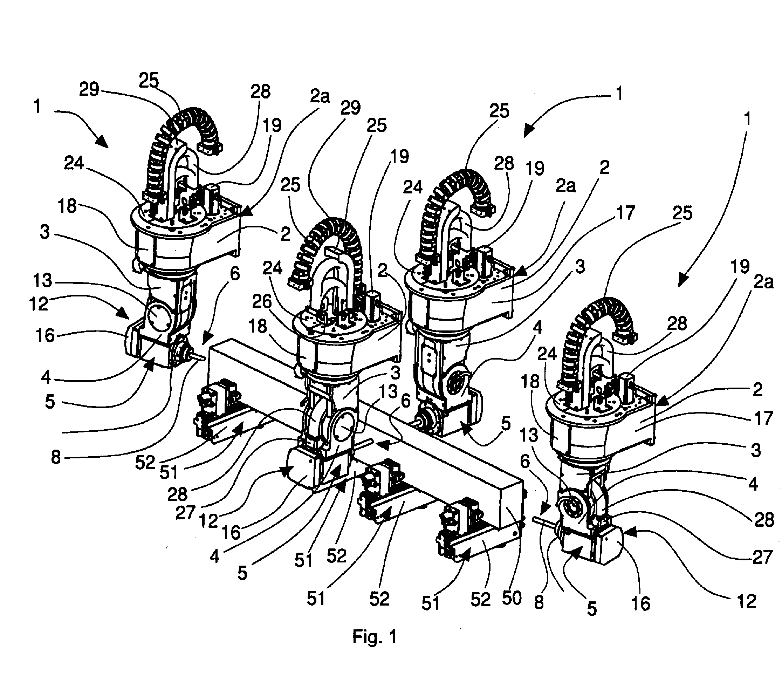

With reference to figures 1 to 7, a tool holder head is shown of a machine tool (not illustrated) for machining elongated elements 50, in particular metal and/or plastic and/or wooden profiled sections used in industry in general and in particular in the window-frame making industry to make frames, such as, for example, windows, french windows, doors, shutters and the like.

The tool holder head 1 comprises a first body 2 that is fixed to a slide (not illustrated) of a machine tool (not illustrated) that is movable along three directions parallel to the axes of a Cartesian reference system. Fixing means is associated to an end wall 2a of the first body 2 to enable fixing to said slide.

The first body 2 is thus movable in three mutually orthogonal directions, i.e. a first vertical direction Z, a second direction X substantially coinciding with or parallel to a longitudinal axis of the elongated element and a third direction Y, coinciding with or substantially parallel to, an axis that is orthogonal to the longitudinal axis of the elongated element and to the vertical direction Z. The first body 2 supports a second body 3, that can rotate 360° around a first axis C parallel to said vertical direction Z.

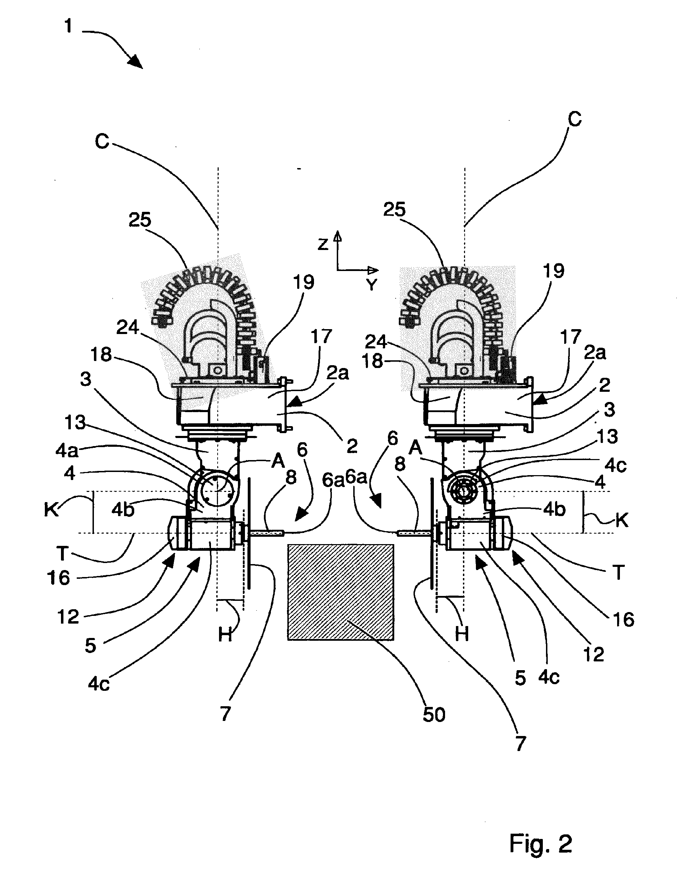

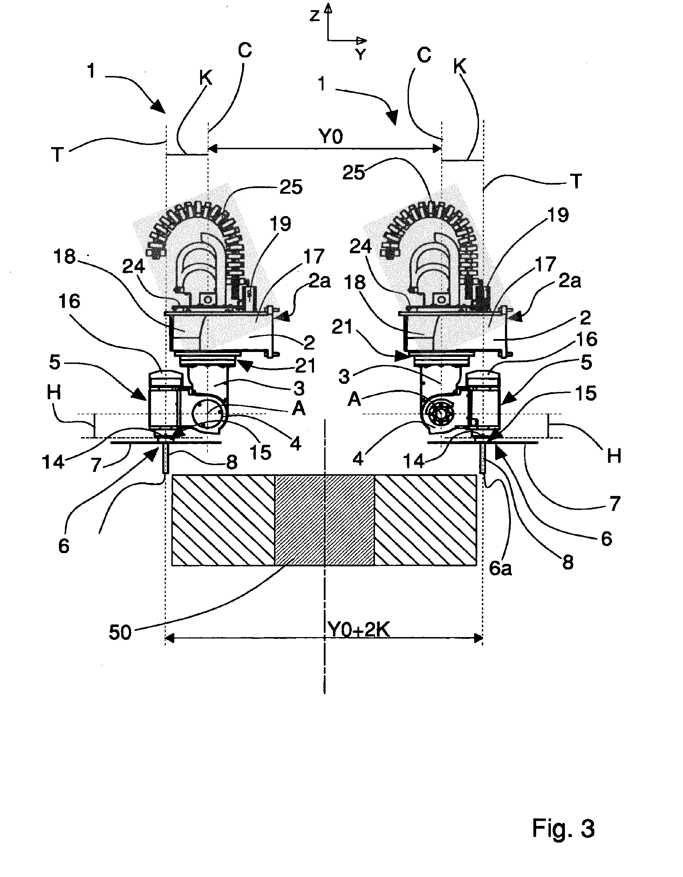

The second body 3 in turn rotatably supports a third body 4, that is rotatable around a second axis A that is orthogonal and incident with respect to the first axis C. The third body 4, in particular, can rotate 90° between a first operating position and a second operating position, as will be illustrated in detail below. In Figure 2, the third body 4 is in the second operating position, in Figure 3 the third body 4 is in the first operating position.

The third body 4 comprises a tool holder unit 5, to which a tool 6 is fixable that is rotatable around a third axis T, that coincides with a longitudinal axis of the tool holder unit. The tool 6 can consist of a cutting means such as a disc blade or saw 7 or a milling unit 8 and it can be noted that in Figure 1 the tool holder unit 5 is shown in which the tool 6 is a milling unit 8, whereas in Figures 2-6 for the sake of simplicity both a blade 7 and a milling unit 8 fitted simultaneously are shown.

It should nevertheless be observed that only one of the two tools at a time is to be deemed to be mountable during operation of the tool holder head 1.

A plurality of locking devices 51 are arranged aligned along the second movement direction X to support and lock the elongated element 50. In Figure 1 the locking devices 51 are four, associated with brackets 52 connected to the base of the machine (not illustrated) and are, for example, made by vices arranged in different positions along the second movement direction X, according to the dimensions of the workpiece 50 and/or of the machining to be performed on the latter. The brackets 52 can be displaced in the direction X to position the vices 51 in the most suitable positions according to the machining to be performed.

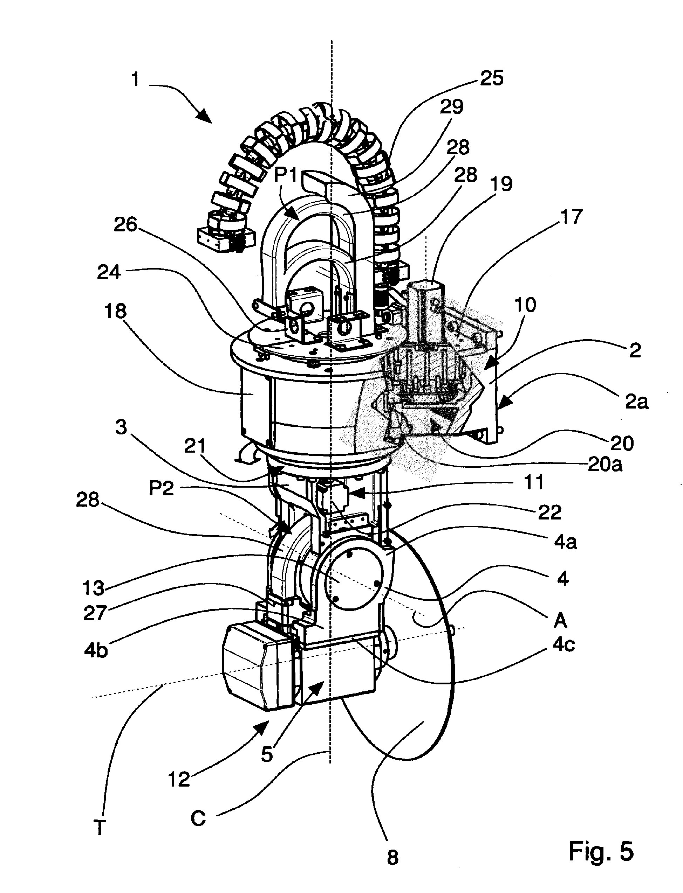

The tool holder head 1 further comprises driving means for moving the tool of the tool-holder unit 5 and/or the third body 4 and/or the second body 3 and thus causes an interaction between the elongated element 50 and the tool holder unit 5. The driving means comprises first driving means 10 (Figure 5) for moving the second body 3 with respect to the first body 2, second driving means 11 for moving the third body 4 with respect to the second body 3 and third driving means 12 for rotating the tool 6, said third driving means 12 being able to comprise an electric spindle 16. The movement of the first body 2 in the three Cartesian directions with respect to the frame of the machine tool occurs with known motor means of the machine that are not disclosed here.

It should be noted that the third body 4 comprises a first portion 4a rotatingly supported by the second body 3 at an articulation 13 that defines a turning coupling between the second body 3 and the third body 4 around the axis A, and a second portion 4b at the lower end 4c of which the tool holder unit 5 is fixed. Fixing the tool holder unit to the lower end 4c of the third body 4 enables the maximum width L1 of the third body 4 in the a plane defined by the first axis C and the second axis A, consequently, also the maximum width of the second body 3 in said plane to be advantageously limited, which can be made substantially the same as said maximum width L1, or also no greater than said maximum width L1.

For example, the maximum width L1 of the third body 4 can be advantageously made only slightly greater than the maximum width L2 of the tool holder unit 5 in said plane, which corresponds to the width of the motor means 16 of the tool holder unit 5.

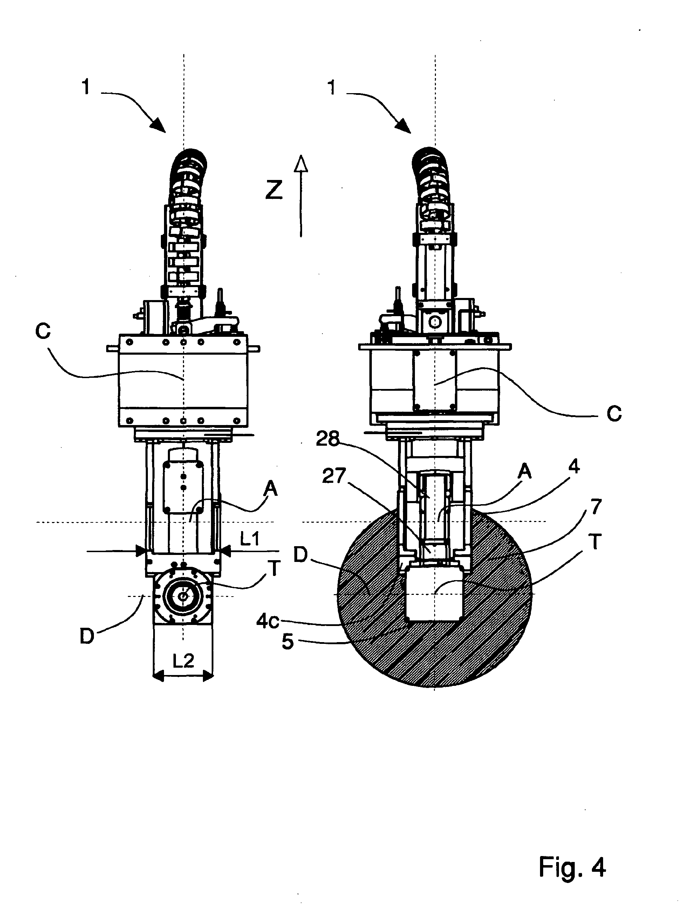

For example the maximum width L1 of the third body 4 can be made advantageously equal to about 125-130% of L2, as in the embodiment illustrated in Figure 4.

Even more advantageously, said maximum width L1 can be made no greater than said maximum width L2.

Minimising the maximum width L1 of the third body 4 and the maximum width of the second body 3 also enables the distance between two adjacent locking devices 51 to be minimised between which the second body 3, the third body 4 and the tool holder unit have to be inserted when an element 50 is machined. This enables vibrations on the element 50 to be minimised during machining, thus maximising machining precision.

Considering a plane defined by the first axis C and the second axis A, the third body 4 is symmetrical to this plane, however the tool holder unit 5 is oriented in space. Further, the second axis A and the third axis T are skew.

It should be noted that in the first operating position of the third body 4, shown in Figure 3, the third axis T and the first axis C are parallel to one another.

In the second operating position, the third body is rotated 90° anticlockwise with respect to the first operating position. Thus as shown at least in figures 1, 2, 5 and 6, the first axis C and the third axis T are orthogonal to one another.

Between the intersection point between the first axis C and the second axis A, and the third axis T there is a distance K, which, in the first operating position (Figure 3), corresponds to the distance between the third axis T and the first axis C that are parallel to one another. A second distance H is identifiable along the third axis T, in both operating positions, as a distance between a straight line that is orthogonal to the axis T and passing through the intersection point between the first axis C and the third axis A, and an attachment point 14 of clamping means 15 of the tool 6 in the tool holder unit 5.

The first distance K and the second distance H are important parameters of the tool holder head 1 that enable the flexibility and the useful working field in the three directions of the tool holder head 1 to be defined.

As regards flexibility, it should be noted that the tool holder head 1 is able to house different types of electrical spindles 16, varying the second distance H, in relation to the type of machining to be performed and to the space occupied by the electric spindle.

The useful working field of the tool holder head 1 depends on the first distance K.

Figure 4, to the right in the drawing, shows a tool holder unit 5 in the second operating position, on which a blade 7 is fitted. It can be observed that the third body 4 is symmetrical in the symmetry plane identified by the first axis C and by the third axis T and that moreover the tool holder unit 5 is fixed in a cantilevered manner below the end portion 4c of the third body 4. The total dimensions occupied by the tool holder head 1 at the second axis A, in said symmetry plane, are defined by the dimension of the second body 3, whereas at the motor means 16 of the electric spindle, the dimension of the tool holder head 1 in said symmetry plane is determined only by the dimension of the motor means 16. As already disclosed previously, the maximum dimension of the second body 3 in said symmetry plane can be made the same as the maximum dimension L1 of the third body 4, which, in turn, can be made no greater than the dimension of the motor means 16. In the case of a tool such as a blade 7, the motor means 16 enables a useful cutting portion of the blade 7 along the axis C influenced only by the dimensions of the motor means 16. In fact, if the slide to which the tool holder head 1 is fixed it has a stroke in the direction Y that is equal to Y0, the working field of the tool holder head, for machining on the upper face of the elongated element 50, for example by a milling unit 8, is equal to Y0+2K, as can be seen from Figure 3.

Similarly, the working field of the tool holder head 1 in the second direction X, is equal to X0+2K, where X0 is the stroke in the direction X of the slide to which the tool holder head 1 is fixed.

The aforesaid distance K thus increases the working field of the tool holder head 1, both in the direction X, and in the direction Y, for machining on the upper face of the elongated element 50.

The distance K positively influences also the displacements of the tool holder head 1 in the direction Z, required when the tool holder head 1, after machining on the upper face of the elongated element 50, has to be displaced to perform machining on a lateral face. In fact, as said previously, the tool holder head 1 comprises the first body 2 which is fixed to a slide of the machine tool, which is suitable for translating in the three Cartesian directions X, Y and Z. The first body 2 has a parallelpipedon-shaped coupling part 17 in which the first end wall 2a is provided associated with guiding and supporting means. The first body 2 further comprises a cylindrical shape part 18 connected to the portion 17 that is suitable for containing an internal tubular portion that supports the second body 3 and is rotatable by 360° with respect to the first body 2 itself.

The internal tubular portion, the longitudinal axis of which corresponds to the first axis C, has a substantially cylindrical wall around which there is fixed coaxially a crown wheel 20a with double toothing of the first driving means 10 fixed around this tubular portion.

The first driving means 10 comprises respective motor means 19 fixed to the upper face of the coupling part 17 and transmission means 20 interposed between the motor means 19 and the crown wheel 20a with double toothing. Figure 5 shows a partial section of the tool holder head 1 at the motor means 19.

The transmission means 20 comprises a toothed pinion with double toothing mounted coaxially on the shaft of the motor means 19 and suitable for engaging the crown wheel 20a with double toothing. The toothing of the toothed pinion 20 and of the crown wheel 20a are slightly staggered so as to recover the engaging clearance and permit precision angular positioning, so-called "zero clearance", of the second body 3.

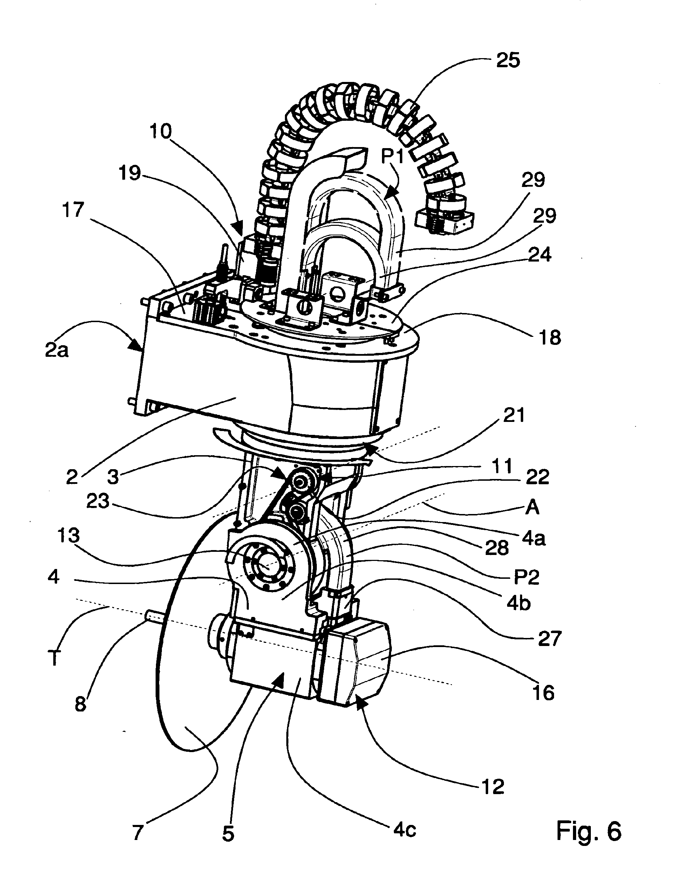

The second body 3, connected to the first body 2 by joining means 21 has an elongated shape and is internally hollow to house the second driving means 11 of the third body 4. The second driving means 11 comprises respective second motor means 22, the axis of which is parallel to the second axis A, connected to the articulation 13 by respective transmission means 23 (Figure 6) interposed between the second motor means 22 and the articulation 13. The transmission means 23 are of the belt type and this belt slides on suitable sliding means and transmission means arranged at the articulation 13 for moving the articulation 13.

It should be noted that the internal tubular portion of the first body 2 is connected to a circular external plate 24, superimposed on the upper face of the cylindrical part 18 of the first body 2, which is a support to electrical connecting means for supplying and controlling the movement of the second body 3 and/or of the third body 4 and/or of the tool 6.

The plate 24 receives an external cable holder guide 25 with flexible meshes containing the supply cables (power) and connecting cables (signal) from the controller (not shown) of the machine tool to the tool holder head 1. These cables are guided by the external cable holder guide 25 inside the first body 2 as far as a bracket 26 illustrated at least in Figure 5 and Figure 6, shaped as a Z, fixed to the plate 24. The electrical connecting means comprises first connecting means fixed to the bracket 26, second connecting means 27 fixed to the third body 4 and an internal cable holder guide 28 associated with the tool holder head 1, conducted by the first connecting means to the second connecting means 27 along a path P that traverses the first body 2, the second body 3 and the third body 4.

Further non-illustrated connecting means is fixed to the second body 3. The first connecting means, the second connecting means 27 and the further connecting means comprise respective terminal boards to which the respective motor means can be connected to control and command the movement of the tool holder head 1.

It should be noted that the internal cable holder guide 28 associated with the tool holder head 1 discloses a first path section P1 shaped outside the tool holder head 1, before being housed inside the first body 2. A stiff cover 29 is interposed between the mesh external cable-holder guide 25 and the internal cable-holder guide 28 and protects the internal cable-holder guide 28 from possible collisions due to the external cable holder guide 25 that could occur during movement of the tool holder head 1.

The first external path section P1 is of variable length in function of the different arrangements adopted by the second body 3 with respect to the first body 2 and by the third body 4 with respect to the first body 2. For example, in the first operating position of the tool holder unit 5, the first path section P1 is U-shaped whereas in the second operating position it is C-shaped. In the first operating position, the first portion P1 is longer than the second configuration.

It is important to emphasise that in Figures 1 to 7, the two different described paths from the internal cable holder guide 28 are illustrated simultaneously during operation of the tool holder head 1, i.e. both the first U-shaped path section P1 and the first C-shaped path section P1 are illustrated. Nevertheless, during operation of the tool holder head 1, only one of the two positions is possible.

As shown at least in Figure 5 and in Figure 6, a second path section P2 is disclosed from the internal cable holder guide 28 around the articulation 13 for the connection from the second body 3 to the third body 4 as far as the second connecting means 27 that comprises a terminal board for the electric spindle arranged above the motor 16.

In use, if the tool holder unit 5 takes a milling unit 8 as illustrated in Figure 1, the tool holder head 1 is arranged in the second operating position for machining head or side faces of the elongated element 50.

If machining has to be performed in the upper face and in the right side face, looking at Figure 1, after being performed, for example, in the left side face, the third body 4 moves away along the axis Z from the elongated element 50, rotates by 90° clockwise to take the tool holder unit 5 from the second operating position to the first operating position. In this manner, the milling unit 8 is arranged facing the upper face of the elongated element 50, as illustrated in Figure 3. After machining on the upper face of the elongated element 50, the first body 2 is translated along the third axis Y until it takes the tool holder unit 5 to the right side face of the elongated element. A 180° rotation of the second body and a 90° rotation of the third body 4 clockwise takes the tool holder unit 1 from the first operating position to the second operating position, to perform machining on the right side face of the elongated element.

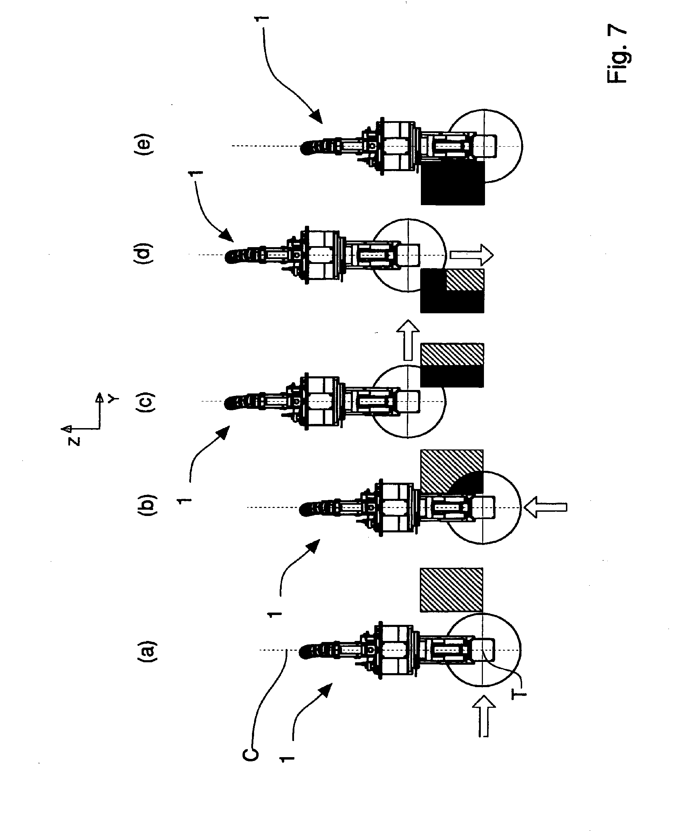

Figure 7 shows successive machining steps of a tool holder head 1 in which the tool-holder unit 5 holds a blade 7 and the machine tool is a shearing unit, for separating the elongated element into several parts. At the start of machining, step (a), the tool holder head 1 arranges the tool holder unit 5 in the second operating position with the third axis T parallel to the axis X and at a height along the axis Z equal to that in which the lower face of the elongated element 50 is positioned, in such a manner as to bring the blade near the elongated element 50 and prepare the blade 7 in a cutting position. If the separation is carried out from left to right, looking at Figure 7, the tool holder unit 5 is translated to the right along the axis Y until it engages the entire useful portion of blade 7. The useful portion of blade for side cuts from left to right is a circular segment limited internally by the right side face of the second body 3, which is parallel to the first axis C. In the next step (c) the head is translated along the axis Z upwards until it takes the low face of the third body 4, that corresponds to the lower face of the tool holder unit 5, aligned on the upper face of the elongated element 50.

In the cutting step (d), the tool holder unit is translated to the right along the axis Y, until it takes the second body 3 further to the right of the right side face of the elongated element 50. In this step, the useful portion of blade 7 is a circular segment limited internally by the lower face of the tool holder head 5, that is orthogonal to the first axis C. In the cutting step (e), the tool holder unit 5 is translated along the axis Z downwards until it completes the cuts of the elongated element 50. The useful portion of blade in this still further cutting step (e) is equal to the useful portion in the first cutting step. A continuous U-shaped cut is thus made that starts from the lower left corner and continues to the lower right corner of the elongated element 50.

Owing to the particular arrangement of the first body 2, of the second body 3 and of the third body 4 in which the tool holder unit 5 is arranged, the tool holder head 1 enables the tool holder unit 5 to be positioned near the machining point, despite the presence of many vices, as shown in Figure 1.

Further, in the case of shearing machines in which the tool 6 is the blade 7, the tool holder head 1 has a portion that is useful for an improved cut with respect to the tool holder heads of the prior art and this ensures greater quality and machining efficiency. As seen above, the dimensions of the second body 3 do not intervene in the cuts from above and the useful portion of blade is a circular sector the dimensions of which depend on the blade 7 and on only the motor means 16, i.e. on the position of the lower face of the motor means 16.

As the tool holder head disposes of a portion that is useful for increased cutting, the tool holder head can perform a continuous movement on the elongated element 50 that avoids a cut in two stages and consequently machining steps.

It is also observed that the first distance K also enables machining to be performed along the axis X and the axis Y at points that are more distant from those reachable only owing to the stroke of the first body 2 along Y, along X or along Z. In other words, having to perform machining rapidly on elements that are lengthened even by 10, 15 metres, the possibility of avoiding successive repositioning of the tool holder head 1 ensures great flexibility of the tool holder head and consequently improves the performance thereof.

## Claims

1. Tool holder head for machining elongated elements (50), in particular profiled sections or panels with a constant section, that are made of metal or plastic material or wood or composites, comprising a first body (2) that is fixable to a slide of a machine tool that is movable along three directions (X, Y, Z) that are mutually orthogonal to one another, said first body (2) supporting a second body (3) that is rotatable by 360° with respect to said first body (2) around a first axis (C) parallel to one of said three directions, and supporting in turn a third body (4) that is rotatable around a second axis (A) orthogonal to and incident to said first axis (C), said third body (4) being rotatingly supported by said second body (3) at an articulation (13) that defines a turning coupling between the second body (3) and the third body (4) around said second axis (A), said third body (4) comprising a tool holder unit (5) supporting a tool (6), for example a cutting means (7) or a milling unit (8), that is rotatable around a third axis (T); said head comprising driving means (10, 11, 12, 16) for moving said tool (6) and/or said third body (4) and/or said second body (3) so as to cause an interaction between said elongated element (50) and said tool (6), said tool holder unit (5) being fixed to a lower end (4c) of said third body (4), **characterized in that** a maximum width of said second body (3) in a plane defined by the first axis (C) and the second axis (A), is substantially equal to a maximum width (L1) of said third body (4) and **in that** the maximum width (L1) of said third body (4) is equal to, or only slightly greater than, a maximum width (L2) of the tool holder unit (5) in said plane defined by the second axis (A) and the first axis (C).

2. Tool holder head according to claim 1, wherein said third body (4) is symmetrical with respect to a symmetry plane defined by said first axis (C) and said third axis (T), however said tool holder unit (5) is oriented in space and wherein said second axis (A) and said third axis (T) are mutually skewed.

3. Tool holder head according to claim 1, or 2, wherein said third body (4) is rotatable by 90° around said second axis (A) and said tool holder unit (5) is movable from a first operating position wherein said third axis (T) and said first axis (C) are parallel and said second axis (A) is orthogonal to said first (C) and said third axis (T) to a second operating position wherein said first axis (C), said second axis (A) and said third axis (T) are mutually orthogonal.

4. Tool holder head according to claim 3, wherein the distance between said third axis (T) and said second axis (A) in said first operating position of said third body (4) is equal to a first distance (K).

5. Tool holder head according to claim 3 or claim 4, wherein the distance along said third axis (T) in said second operating position between the intersection point between said first axis (C) and said third axis (T) and an attachment point (14) of clamping means (15) of said tool (6) is equal to a second distance (H).

6. Tool holder head according to any preceding claim, wherein said first body (2) is movable along a first vertical direction (Z), a second direction (X) that is substantially parallel to a longitudinal axis of said elongated element (50) and a third direction (Y) that is substantially orthogonal to said longitudinal axis, said first axis (C) being parallel to said first vertical direction (Z).

7. Tool holder head according to claim 6 as appended to claim 4, wherein said tool (6) is suitable for machining said elongated element (50) along said third direction (Y) for a maximum stroke that is equal to the maximum displacement (Y0) of said first body (2) along said third direction (Y) plus twice said first distance (K).

8. Tool holder head according to any preceding claim, wherein said first body (2) comprises a tubular portion provided with a substantially cylindrical internal wall the longitudinal axis of which corresponds to said first axis (C), rotatably supporting said second body (3).

9. Tool holder head according to claim 8, and comprising a toothed wheel with double toothing fixed around said cylindrical internal wall, and first driving means (10) of said driving means fixed to said first body (2), transmission means (20) being interposed between said first driving means (10) and said toothed wheel with double toothing.

10. Tool holder head according to claim 9, wherein said transmission means (20) comprises a toothed pinion with double toothing fitted on the shaft of respective motor means (19) of said first motor means (10), said toothed pinion with double toothing engaging said toothed wheel with double toothing to permit precision radial positioning [with zero clearance] of said tubular portion with respect to said motor.

11. Tool holder head according to any preceding claim, wherein said driving means comprises second motor means (11), for moving said third body (4) with respect to said second body (2), wherein said second motor means (11) comprises respective motor means (22) provided with an axis parallel to said second axis (A) and respective belt transmission means (23), said motor means (22) and said transmission means (23) being housed in and fixed to said second body (3).

12. Tool holder head according to any preceding claim, wherein said third body (4) comprises a first end (4a) supported rotatably by said second body (3) around said second axis (A) and an intermediate portion (4b) to which said tool holder unit (5) is fixed.

13. Tool holder head according to claim 12, wherein said tool holder unit (5) extends longitudinally around said third axis (T), said tool holder unit (5) being fixed in a cantilevered manner to said intermediate portion (4b) of said third body (4) to define a second end (4c) of said third body (4).

14. Tool holder head according to one of the preceding claims, wherein said driving means comprises third driving means (12) to rotate said tool (6), wherein said third driving means (12) comprises respective motor means (16) provided with an axis coinciding with said third axis (T) and the total occupied space of which is substantially equal to that of said tool holder unit (5).

15. Tool holder head according to any preceding claim, and comprising electrical connecting means (27, 28) to supply and control said first body (2) and/or said second body (3) and/or said third body (4) and/or said tool holder head (5), said electrical connecting means comprising a cable holder guide (28) traversing said first body (2), said second body (3) and said third body (4) and connecting means (27) connecting to said tool holder unit (5) fixed to said intermediate portion to supply and control said tool holder unit (5).

16. Machine tool for machining elongated elements, in particular profiled sections of frames, comprising a chassis and a tool holder head according to any one of claims 1 to 15.

## Patentansprüche

1. Werkzeughalterkopf zum Bearbeiten von langerstreckten Elementen (50), insbesondere von Profilabschnitten oder Paneelen mit einem konstanten Querschnitt, die aus Metall oder Kunststoffmaterial oder Holz oder Kompositmaterialien gefertigt sind, mit einem ersten Körper (2), der an einem Schlitten einer Werkzeugmaschine befestigbar ist, der entlang von drei Richtungen (X, Y, Z) beweglich ist, die wechselseitig orthogonal zueinander sind, wobei der erste Körper (2) einen zweiten Körper (3) hält, der um 360° bezüglich des ersten Körpers (2) um eine erste Achse (C) drehbar ist, die parallel zu einer der drei Richtungen ist, und der wiederum einen dritten Körper (4) hält, der um eine zweite Achse (A) drehbar ist, die orthogonal zur ersten Achse (C) ist und diese schneidet, wobei der dritte Körper (4) von dem zweiten Körper (3) an einem Gelenk (13) drehbar gehalten ist, das eine Schwenkkopplung zwischen dem zweiten Körper (3) und dem dritten Körper (4) um die zweite Achse (A) definiert, wobei der dritte Körper (4) eine Werkzeughaltereinheit (5) aufweist, die ein Werkzeug (6) hält, bspw. Schneidmittel (7) oder eine Fräseinheit (8), das um eine dritte Achse (T) drehbar ist; wobei der Kopf Antriebsmittel (10, 11, 12, 16) zum Bewegen des Werkzeuges (6) und/oder des dritten Körpers (4) und/oder des zweiten Körpers (3) aufweist, um so eine Wechselwirkung zwischen dem langerstreckten Element (50) und dem Werkzeug (6) zu bewirken, wobei die Werkzeughaltereinheit (5) an einem unteren Ende (4c) des dritten Körpers (4) befestigt ist, **dadurch gekennzeichnet, dass** eine maximale Breite des zweiten Körpers (3) in einer durch die erste Achse (C) und die zweite Achse (A) definierten Ebene im Wesentlichen gleich einer maximalen Breite (L1) des dritten Körpers (4) ist, und dass die maximale Breite (L1) des dritten Körpers (4) gleich einer maximalen Breite (L2), oder nur geringfügig größer als diese, der Werkzeughaltereinheit (5) in der durch die zweite Achse (A) und die erste Achse (C) definierten Ebene ist.

2. Werkzeughalterkopf nach Anspruch 1, wobei der dritte Körper (4) symmetrisch bezüglich einer Symmetrieebene ist, die durch die erste Achse (C) und die dritte Achse (T) definiert ist, wobei jedoch die Werkzeughaltereinheit (5) räumlich orientiert ist, und wobei die zweite Achse (A) und die dritte Achse (T) wechselseitig schräg sind.

3. Werkzeughalterkopf nach Anspruch 1 oder 2, wobei der dritte Körper (4) um 90° um die zweite Achse (A) drehbar ist, und wobei die Werkzeughaltereinheit (5) aus einer ersten Betriebsstellung, in der die dritte Achse (T) und die erste Achse (C) parallel sind und die zweite Achse (A) orthogonal zu der ersten (C) und der dritten Achse (T) ist, in eine zweite Betriebsstellung bewegbar ist, in der die erste Achse (C), die zweite Achse (A) und die dritte Achse (T) wechselseitig orthogonal sind.

4. Werkzeughalterkopf nach Anspruch 3, wobei in der ersten Betriebsstellung des dritten Körpers (4) der Abstand zwischen der dritten Achse (T) und der zweiten Achse (A) gleich einem ersten Abstand (K) ist.

5. Werkzeughalterkopf nach Anspruch 3 oder Anspruch 4, wobei in der zweiten Betriebsstellung der Abstand entlang der dritten Achse (T) zwischen dem Schnittpunkt zwischen der ersten Achse (C) und der dritten Achse (T) und einem Anbringungspunkt (14) von Klemmmitteln (15) des Werkzeuges (6) gleich einem zweiten Abstand (H) ist.

6. Werkzeughalterkopf nach einem vorhergehenden Anspruch, wobei der erste Körper (2) entlang einer ersten vertikalen Richtung (Z), einer zweiten Richtung (X), die im Wesentlichen parallel zu einer Längsachse des langerstreckten Elements (50) ist, und einer dritten Richtung (Y) beweglich ist, die im Wesentlichen orthogonal zu der Längsachse ist, wobei die erste Achse (C) parallel zu der ersten vertikalen Richtung (Z) ist.

7. Werkzeughalterkopf nach Anspruch 6, sofern von Anspruch 4 abhängig, wobei das Werkzeug (6) zum Bearbeiten des langerstreckten Elementes (50) entlang der dritten Richtung (Y) für einen maximalen Hub geeignet ist, der gleich der maximalen Verschiebung (Y0) des ersten Körpers (2) entlang der dritten Richtung (Y) plus das Zweifache des ersten Abstandes (K) ist.

8. Werkzeughalterkopf nach einem vorhergehenden Anspruch, wobei der erste Körper (2) einen rohrförmigen Abschnitt aufweist, der mit einer im Wesentlichen zylindrischen Innenwand versehen ist, deren Längsachse der ersten Achse (C) entspricht, die den zweiten Körper (3) drehbar hält.

9. Werkzeughalterkopf nach Anspruch 8, und mit einem Zahnrad mit Doppelverzahnung, das um die zylindrische Innenwand herum befestigt ist, und mit ersten Antriebsmitteln (10) der an dem ersten Körper (2) befestigten Antriebsmittel, wobei Übertragungsmittel (20) zwischen den ersten Antriebsmitteln (10) und dem Zahnrad mit Doppelverzahnung angeordnet sind.

10. Werkzeughalterkopf nach Anspruch 9, wobei die Übertragungsmittel (20) ein Zahnritzel mit Doppelverzahnung aufweisen, das an der Welle entsprechender Motormittel (19) der ersten Motormittel (10) sitzt, wobei das Zahnritzel mit Doppelverzahnung mit dem Zahnrad mit Doppelverzahnung in Eingriff steht, um eine radiale Präzisionspositionierung [mit null Spiel] des rohrförmigen Abschnittes bezüglich des Motors zu ermöglichen.

11. Werkzeughalterkopf nach einem vorhergehenden Anspruch, wobei die Antriebsmittel zweite Motormittel (11) zum Bewegen des dritten Körpers (4) bezüglich des zweiten Körpers (2) aufweisen, wobei die zweiten Motormittel (11) jeweilige Motormittel (22) aufweisen, die mit einer Achse parallel zur zweiten Achse (A) und jeweiligen Riemenübertragungsmitteln (23) versehen sind, wobei die Motormittel (22) und die Übertragungsmittel (23) in dem zweiten Körper (3) eingehäust befestigt sind.

12. Werkzeughalterkopf nach einem vorhergehenden Anspruch, wobei der dritte Körper (4) ein erstes Ende (4a), das von dem zweiten Körper (3) um die zweite Achse (A) drehbar gehalten ist, und einen Zwischenabschnitt (4b) aufweist, an dem die Werkzeughaltereinheit (5) befestigt ist.

13. Werkzeughalterkopf nach Anspruch 12, wobei die Werkzeughaltereinheit (5) sich längs um die dritte Achse (T) erstreckt, wobei die Werkzeughaltereinheit (5) auslegerartig an dem Zwischenabschnitt (4b) des dritten Körpers (4) befestigt ist, um ein zweites Ende (4c) des dritten Körpers (4) zu definieren.

14. Werkzeughalterkopf nach einem der vorhergehenden Ansprüche, wobei die Antriebsmittel dritte Antriebsmittel (12) aufweisen, um das Werkzeug (6) zu drehen, wobei die dritten Antriebsmittel (12) jeweilige Motormittel (16) aufweisen, die mit einer Achse versehen sind, die mit der dritten Achse (T) zusammenfällt, und deren gesamter eingenommener Raum im Wesentlichen gleich demjenigen der Werkzeughaltereinheit (5) ist.

15. Werkzeughalterkopf nach einem vorhergehenden Anspruch, und mit elektrischen Anschlussmitteln (27, 28), um den ersten Körper (2) und/oder den zweiten Körper (3) und/oder den dritten Körper (4) und/oder den Werkzeughalterkopf (5) zu versorgen und zu steuern, wobei die elektrischen Anschlussmittel eine Kabelhalterführung (28), die durch den ersten Körper (2), den zweiten Körper (3) und den dritten Körper (4) traversiert, und Anschlussmittel (27) zum Anschließen der an dem Zwischenabschnitt befestigten Werkzeughaltereinheit (5) aufweisen, um die Werkzeughaltereinheit (5) zu versorgen und zu steuern.

16. Werkzeugmaschine zum Bearbeiten von langerstreckten Elementen, insbesondere von Profilabschnitten von Rahmen, mit einem Maschinengestell und einem Werkzeughalterkopf nach einem der Ansprüche 1 bis 15.

## Revendications

1. Tête de support d'outil pour usiner des éléments allongés (50), en particulier des sections profilées ou des panneaux profilés de section constante, qui sont constitués de métal ou d'une matière plastique ou de bois ou de composites, comprenant un premier corps (2) qui peut être fixé à un coulisseau d'une machine-outil qui est déplaçable selon trois directions (X, Y, Z) qui sont mutuellement orthogonales les unes par rapport aux autres, ledit premier corps (2) supportant un deuxième corps (3) qui peut pivoter de 360° par rapport audit premier corps (2) autour d'un premier axe (C) parallèle à l'une desdites trois directions, et supportant à son tour un troisième corps (4) qui peut pivoter autour d'un deuxième axe (A) orthogonal par rapport audit premier axe (C) tout en lui étant incident, ledit troisième corps (4) étant supporté de manière rotative par ledit deuxième corps (3) au niveau d'une articulation (13) qui définit un couplage tournant entre le deuxième corps (3) et le troisième corps (4) autour dudit deuxième axe (A), ledit troisième corps (4) comprenant une unité (5) de support d'outil supportant un outil (6), par exemple des moyens de coupe (7) ou une unité de fraisage (8), qui est mobile en rotation autour d'un troisième axe (T) ; ladite tête comprenant des moyens d'entraînement (10, 11, 12, 16) pour déplacer ledit outil (6) et/ou ledit troisième corps (4) et/ou ledit deuxième corps (3) de manière à provoquer une interaction entre ledit élément allongé (50) et ledit outil (6), ladite unité (5) de support d'outil étant fixée à une extrémité inférieure (4c) dudit troisième corps (4), **caractérisée en ce qu'**une largeur maximale dudit deuxième corps (3) dans un plan défini par le premier axe (C) et le deuxième axe (A) est sensiblement égale à une largeur maximale (L1) dudit troisième corps (4) et **en ce que** la largeur maximale (L1) dudit troisième corps (4) est égale, ou seulement légèrement supérieure, à une largeur maximale (L2) de l'unité (5) de support d'outil dans ledit plan défini par le deuxième axe (A) et le premier axe (C).

2. Tête de support d'outil selon la revendication 1, dans laquelle ledit troisième corps (4) est symétrique par rapport à un plan de symétrie défini par ledit premier axe (C) et ledit troisième axe (T), quelle que soit l'orientation dans l'espace de ladite unité (5) de support d'outil, et dans laquelle ledit deuxième axe (A) et ledit troisième axe (T) sont obliques l'un par rapport à l'autre.

3. Tête de support d'outil selon la revendication 1 ou 2, dans laquelle ledit troisième corps (4) peut pivoter de 90° autour dudit deuxième axe (A) et ladite unité (5) de support d'outil est mobile depuis une première position de fonctionnement, dans laquelle ledit troisième axe (T) et ledit premier axe (C) sont parallèles et ledit deuxième axe (A) est orthogonal audit premier axe (C) et audit troisième axe (T), vers une deuxième position de fonctionnement, dans laquelle ledit premier axe (C), ledit deuxième axe (A) et ledit troisième axe (T) sont mutuellement orthogonaux.

4. Tête de support d'outil selon la revendication 3, dans laquelle la distance entre ledit troisième axe (T) et ledit deuxième axe (A) dans ladite première position de fonctionnement dudit troisième corps (4) est égale à une première distance (K).

5. Tête de support d'outil selon la revendication 3 ou la revendication 4, dans laquelle la distance le long dudit troisième axe (T) dans ladite deuxième position de fonctionnement entre le point d'intersection dudit premier axe (C) et dudit troisième axe (T) et un point de fixation (14) de moyens de serrage (15) dudit outil (6) est égale à une deuxième distance (H).

6. Tête de support d'outil selon une quelconque revendication précédente, dans laquelle ledit premier corps (2) est mobile le long d'une première direction verticale (Z), d'une deuxième direction (X) qui est sensiblement parallèle à un axe longitudinal dudit élément allongé (50) et d'une troisième direction (Y) qui est sensiblement orthogonale audit axe longitudinal, ledit premier axe (C) étant parallèle à ladite première direction verticale (Z).

7. Tête de support d'outil selon la revendication 6 lorsqu'elle dépend de la revendication 4, dans laquelle ledit outil (6) est apte à usiner ledit élément allongé (50) le long de ladite troisième direction (Y) sur une course maximale qui est égale au déplacement maximal (Y0) dudit premier corps (2) le long de ladite troisième direction (Y), augmenté de deux fois ladite première distance (K).

8. Tête de support d'outil selon une quelconque revendication précédente, dans laquelle ledit premier corps (2) comprend une portion tubulaire dotée d'une paroi interne sensiblement cylindrique dont l'axe longitudinal correspond audit premier axe (C), supportant de manière pivotante ledit deuxième corps (3).

9. Tête de support d'outil selon la revendication 8, et comprenant une roue dentée à double dentition fixée autour de ladite paroi interne cylindrique, et des premiers moyens d'entraînement (10) desdits moyens d'entraînement fixés audit premier corps (2), des moyens de transmission (20) étant interposés entre lesdits premiers moyens d'entraînement (10) et ladite roue dentée à double dentition.

10. Tête de support d'outil selon la revendication 9, dans laquelle lesdits moyens de transmission (20) comprennent un pignon denté à double dentition ajusté sur l'arbre de moyens de moteur respectifs (19) desdits premiers moyens de moteur (10), ledit pignon denté à double dentition venant en engagement avec ladite roue dentée à double dentition pour permettre un positionnement radial de précision [avec un jeu nul] de ladite portion tubulaire par rapport audit moteur.

11. Tête de support d'outil selon une quelconque revendication précédente, dans laquelle lesdits moyens d'entraînement comprennent des deuxièmes moyens de moteur (11), pour déplacer ledit troisième corps (4) par rapport audit deuxième corps (2), lesdits deuxièmes moyens de moteur (11) comprenant des moyens de moteur respectifs (22), prévus avec un axe parallèle audit deuxième axe (A), et des moyens de transmission par courroie respectifs (23), lesdits moyens de moteur (22) et lesdits moyens de transmission (23) étant logés dans ledit deuxième corps (3) et fixés à celui-ci.

12. Tête de support d'outil selon une quelconque revendication précédente, dans laquelle ledit troisième corps (4) comprend une première extrémité (4a) supportée de manière pivotante par ledit deuxième corps (3) autour dudit deuxième axe (A) et une portion intermédiaire (4b) à laquelle ladite unité (5) de support d'outil est fixée.

13. Tête de support d'outil selon la revendication 12, dans laquelle ladite unité (5) de support d'outil s'étend longitudinalement autour dudit troisième axe (T), ladite unité (5) de support d'outil étant fixée en porte-à-faux sur ladite portion intermédiaire (4b) dudit troisième corps (4) pour définir une deuxième extrémité (4c) dudit troisième corps (4).

14. Tête de support d'outil selon une des revendications précédentes, dans laquelle lesdits moyens d'entraînement comprennent des troisièmes moyens d'entraînement (12) pour faire tourner ledit outil (6), lesdits troisièmes moyens d'entraînement (12) comprenant des moyens de moteur respectifs (16) prévus avec un axe qui coïncide avec ledit troisième axe (T) et dont l'espace occupé total est sensiblement égal à celui de ladite unité (5) de support d'outil.

15. Tête de support d'outil selon une quelconque revendication précédente, et comprenant des moyens de connexion (27, 28) électriques pour alimenter et commander ledit premier corps (2) et/ou ledit deuxième corps (3) et/ou ledit troisième corps (4) et/ou ladite unité (5) de support d'outil, lesdits moyens de connexion électriques comprenant un guide (28) de support de câble, traversant ledit premier corps (2), ledit deuxième corps (3) et ledit troisième corps (4), et des moyens de connexion (27) assurant une connexion à ladite unité (5) de support d'outil et fixés à ladite portion intermédiaire pour alimenter et commander ladite unité (5) de support d'outil.

16. Machine-outil pour usiner des éléments allongés, en particulier des sections profilées d'armatures, comprenant un châssis et une tête de support d'outil selon l'une quelconque des revendications 1 à 15.
